(19) Europäisches Patentamt
European Patent Office
Office européen des brevets

(11) **EP 1 775 952 A2**

(12) **EUROPEAN PATENT APPLICATION**

(43) Date of publication:
**18.04.2007 Bulletin 2007/16**

(51) Int Cl.:
***H04N 7/18*** *(2006.01)*

(21) Application number: **06122404.4**

(22) Date of filing: **17.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.10.2005 JP 2005301989**

(71) Applicant: **SANYO ELECTRIC CO., LTD.**
**Moriguchi-shi, Osaka-fu 570-8677 (JP)**

(72) Inventors:
• **Yang, Changhui**
**2-chome**
**Moriguchi City**
**Osaka 570-8677 (JP)**
• **Hongo, Hitoshi**
**2-chome**
**Moriguchi City**
**Osaka 570-8677 (JP)**

(74) Representative: **Perkins, Dawn Elizabeth**
**Venner Shipley LLP**
**20 Little Britain**
**London EC1A 7DH (GB)**

(54) **Vehicle drive assistance system**

(57)     A vehicle drive assistant system which converts, into birds' eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising a means for, when each overlapping portion in which two bird's-eye views overlap each other is synthesized, setting a border line which allows two regions to be alternately disposed with respect to the overlapping portion and adopting a bird's-eye view in a region separated by the border line in the overlapping portion while adopting the other bird's-eye view in the other region separated by the border line so as to synthesize the overlapping portion.

FIG. 2

EP 1 775 952 A2

**Description**

BACKGROUND OF THE INVENITON

1. Field of the Invention

The present invention relates to a vehicle drive assistant system.

2. Description of the Related Art

It is difficult for a vehicle driver or the like to confirm the backward direction because a blind corner occurs when he or she backs up. For the reason, there has been developed a system which is provided with a vehicle loaded camera for monitoring the backward scene which is likely to becomes a blind corner for a vehicle driver so as to display its photographed image on a screen of car navigation unit or the like.

However, when a wide angle lens is used to display a wide range, lens distortion is generated in a displayed image. Further, as an object is farther from the camera, its image is displayed smaller than in case of an ordinary lens, so that it is difficult to recognize a distance or space backward of a vehicle from the photographed image.

Thus, a research for not just displaying a camera image but presenting an image more gentle for the human using image processing technology has been conducted. One of them is to convert the coordinates of a photographed image and generate a bird's-eye view as seen from above the ground and display it. By displaying the bird's-eye view as seen from above the ground, the vehicle driver can grasp the distance or space backward of the vehicle easily.

Further, as the vehicle drive assistant system for parking, an apparatus which converts images obtained from multiple cameras to all around bird's-eye view by geometric transformation and displays the all around bird's-eye view on a monitor has been developed (see Japanese Laid-Open Patent Publication NO.11-78692). This apparatus has an advantage that the all around of a vehicle can be covered over 360° without any blind corner because the all around scene of the vehicle can be presented to a vehicle driver as a view seen from above the ground.

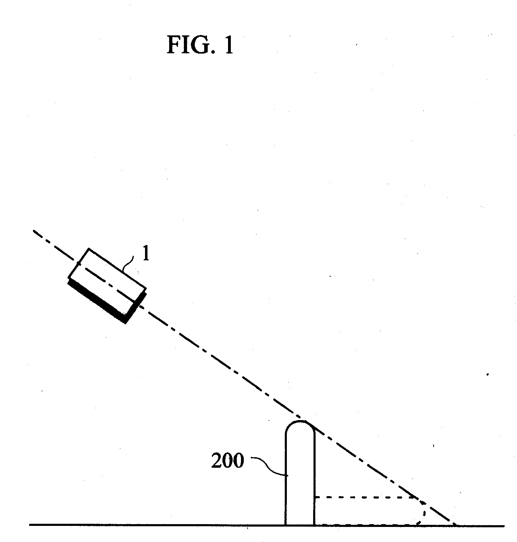

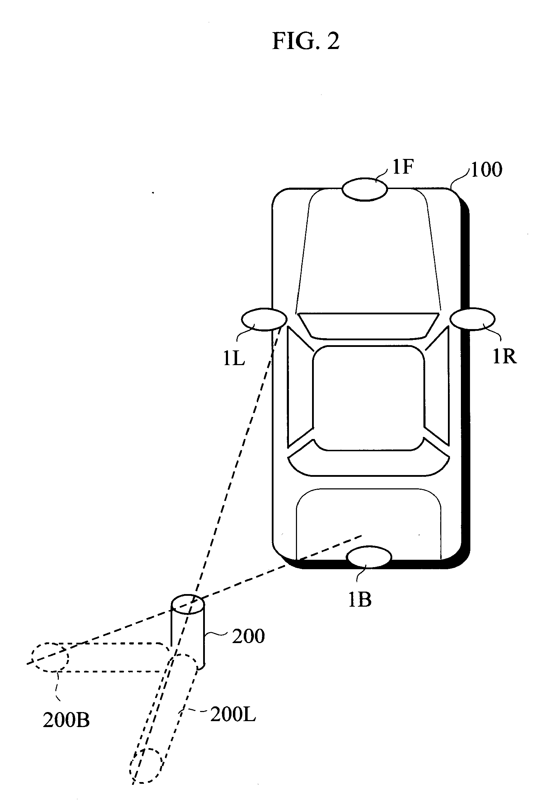

However, in the bird's-eye view, as shown in FIG. 1, an object 200 having a height is projected to the ground such that its image is deformed on an extension line when a camera 1 and the object 200 are connected. If the object 200 having a height exists obliquely backward of the left rear end of the vehicle when the vehicle 100 is provided with cameras 1F, 1B, 1L, 1R at its front, rear, left and right sides as shown in FIG. 2, a projection image by the left side camera 1L is 200L and a projection image by the rear side camera 1B is 200B.

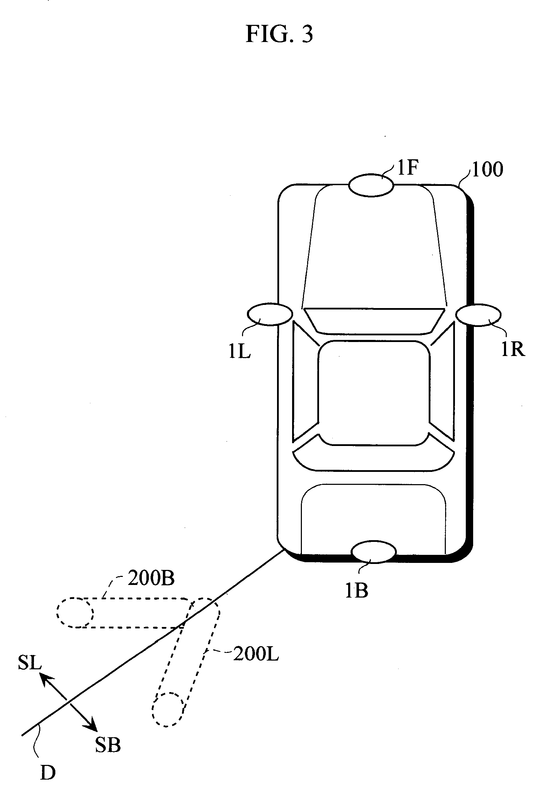

Both the projection images 200L and 200B have an overlapping portion in which a bird's-eye view obtained from an image photographed by the left side camera 1L and a bird's-eye view obtained by an image photographed by the rear side camera 1B overlaps each other. Then, if this overlapping portion is divided into left side camera region SL and rear camera region SB by a border line D extending obliquely backward from the left rear end of the vehicle as shown in FIG. 3, the projection image 200B by the rear side camera 1B exists in the left side camera region SL and the projection image 200L by the left side camera 1L exists in the rear camera region SB.

If only a bird's-eye view obtained from the photographed image of the left side camera 1L is adopted to the left side camera region SL and only a bird's-eye view obtained from the photographed image of the rear camera 1B is adopted to the rear camera region SB when the overlapping portions are synthesized, both the projection images 200L and 200B disappear in the all around bird's-eye view obtained after synthesis.

To solve this problem, it can be considered to blend the both bird's-eye views when the aforementioned overlapping portions are synthesized. However, because the both projection images 200L and 200B exist in the all around bird's-eye view obtained after synthesis, the object 200 appears as double image. Further, because both projection images 200L and 200B are blended as a background image, the projection images 200L and 200B become difficult to see depending on the colors of the object 200 and the background.

According to another developed method (see Japanese Patent No.3372944), when a bird's-eye image obtained from the rear camera 1B and a bird's-eye image obtained from the side cameras 1L and 1R are synthesized, only the bird's-eye view obtained from the side cameras 1L and 1R is adopted at the overlapping portion so as to generate a synthesized bird's-eye view taking preference to the side camera and only a bird's-eye view obtained from the rear camera 1B is adopted at that overlapping portion so as to generate a synthesized bird's-eye view taking preference to the rear camera and these two kinds of the synthesized bird's-eye views are arranged side by side for display.

However, according to this method, the vehicle driver has to grasp situations around the vehicle by comparing the two bird's-eye views and therefore, burden on the vehicle driver increases thereby possibly damaging the safety.

SUMMARY OF THE INVENTION

An object of the present invention is to provide a vehicle drive assistant system capable of solving such a problem that an object having a height disappears on a synthesized bird's-eye view and which allows that object to be recognized easily.

To achieve the above-mentioned object, according to a first aspect of the present invention, there is provided a vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising a means for, when each overlapping portion in which two bird's-eye views overlap each other is synthesized, setting a border line which allows two regions to be alternately disposed with respect to the overlapping portion and adopting a bird's-eye view in a region separated by the border line in the overlapping portion while adopting the other bird's-eye view in the other region separated by the border line so as to synthesize the overlapping portion.

According to a second aspect of the present invention, there is provided a vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, comprising a means for, when each overlapping portion in which two bird's-eye views overlap each other is synthesized, setting a pectinate border line with respect to the overlapping portion and adopting a bird's-eye view in a region separated by the pectinate border line in the overlapping portion while adopting the other bird's-eye view in the other region separated by the pectinate border line so as to synthesize the overlapping portion.

According to a third aspect of the present invention, there is provided a vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising: a first synthesized bird's-eye view generating means for, when each bird's-eye view is synthesized, generating a first synthesized bird's-eye view obtained by adopting only a bird's-eye view preliminarily set in each overlapping portion in which two bird's-eye views overlap; a second synthesized bird's-eye view generating means for, when each bird's-eye view is synthesized, generating a second synthesized bird's-eye view obtained by adopting only the other bird's-eye view preliminarily set in each overlapping portion in which two bird's-eye views overlap; and a control means for displaying the first synthesized bird's-eye view and the second synthesized bird's-eye view alternately on the display unit by changing over the first synthesized bird's-eye view generating means and the second synthesized bird's-eye view generating means alternately.

According to a fourth aspect of the present invention, there is provided a vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising: a first synthesized bird's-eye view generating means for, when each bird's-eye view is synthesized, generating a first synthesized bird's-eye view obtained by adopting only a bird's-eye view preliminarily set in each overlapping portion in which two bird's-eye views overlap; a second synthesized bird's-eye view generating means for, when each bird's-eye view is synthesized, generating a second synthesized bird's-eye view obtained by adopting only the other bird's-eye view preliminarily set in each overlapping portion in which two bird's-eye views overlap; a determining means for determining whether or not an object having a height exists by comparing two bird's-eye views in each overlapping portion in which two bird's-eye views overlap each other; a first control means which, if it is determined that the object having the height exists in at least one overlapping portion by the determining means, displays the first synthesized bird's-eye view and the second synthesized bird's-eye view alternately on the display unit by changing over the first synthesized bird's-eye view generating means and the second synthesized bird's-eye view generating means alternately; and a second control means which, if it is determined that no object having a height exists in any overlapping portion by the determining means, generates a synthesized bird's-eye view by any one synthesized bird's-eye view generating means preliminarily set among the first synthesized bird's-eye view generating means and the second synthesized bird's-eye view generating means and displays a generated synthesized bird's-eye view on the display unit.

According to a fifth aspect of the present invention, there is provided a vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising: a first synthesized bird's-eye view generating means for, when each bird's-eye view is synthesized, generating a first synthesized bird's-eye view obtained by adopting only a bird's-eye view preliminarily set in each overlapping portion in which two bird's-eye views overlap; a second synthesized bird's-eye view generating means for, when each bird's-eye view is synthesized, generating a second synthesized bird's-eye view obtained by adopting only the other bird's-eye view preliminarily set in each overlapping portion in which two bird's-eye views overlap;

a selecting means for selecting any one of the first synthesized bird's-eye view generating means and the second synthesized bird's-eye view generating means depending on the advancement condition of the vehicle; and a control means for generating a synthesized bird's-eye view by the synthesized bird's-eye view generating means selected by the selecting means and displaying a generated synthesized bird's-eye view on the display unit.

According to a sixth aspect of the present invention, there is provided a vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising: a preference bird's-eye view determining means for determining a bird's-eye view in which an object having a height appears larger among two bird's-eye views in each overlapping portion in which two bird's-eye views overlap as a preference bird's-eye view; a synthesized bird's-eye view generating means for, when each bird's-eye view is synthesized, generating a synthesized bird's-eye view by adopting only the preference bird's-eye view determined by the preference bird's-eye view determining means in each overlapping portion in which two bird's-eye views overlap; and a means for displaying, on the display unit, the synthesized bird's-eye view generated by the synthesized bird's-eye view generating means.

The preference bird's-eye view determining means in the vehicle drive assistant system according to the sixth aspect comprises: for example, a means which picks up a difference between a bird's-eye view and other bird's-eye view in the overlapping portion in which two bird's-eye views overlap and determines a region in which a difference amount is larger than a predetermined amount as a difference region; and a means which calculates an integrated value of an edge intensity within the difference region between the two bird's-eye views and determines the bird's-eye view in which the integrated value of the edge intensity is larger as the preference bird's-eye view.

It is preferable that the vehicle drive assistant system according to the first to sixth aspects comprises a determining means for determining whether or not an object having a height exists by comparing two bird's-eye views in each overlapping portion in which two bird's-eye views overlap each other, and a means for displaying a mark indicating the object having the height in the synthesized bird's-eye view if it is determined that the object having the height exists in at least one overlapping portion by the determining means.

It is preferable that the vehicle drive assistant system according to the first to sixth aspects comprises a determining means for determining whether or not an object having a height exists by comparing two bird's-eye views in each overlapping portion in which two bird's-eye views overlap each other; and a means for producing an alarm sound if it is determined that the object having the height exists in at least one overlapping portion by the determining means.

BRIEF DESCRIPTION OF THE DRAWINGS

FIG. 1 is a schematic view showing that in bird's-eye view, an object 200 having a height is projected to the ground such that its image is deformed on an extension line when a camera 1 and the object 200 are connected;

FIG. 2 is a schematic view showing a projection image 200L by a left side camera 1L and a projection image 200B by a rear camera 1B when an object 200 having a height exists obliquely backward of the left rear end of a vehicle;

FIG. 3 is a schematic view showing that a projection image 200B by a rear camera 1B exists in a left side camera region SL and a projection image 200L by a left side camera 1L exists in a rear camera region SB;

FIG. 4 is a schematic view showing a camera 1 provided at the rear portion of a vehicle 100;

FIG. 5 is a schematic view showing the relation among a camera coordinate system XYZ, a coordinate system $X_{bu}$, $Y_{bu}$ of an image pickup face S of a camera 1 and a world coordinate system $X_w$, $Y_w$, $Z_w$ containing a two-dimensional ground coordinate system $X_w$, $Z_w$;

FIG. 6 is a plan view showing an example of arrangement of cameras 1F, 1B, 1L, 1R;

FIG. 7 is a side view of FIG. 6;

FIG. 8 is a schematic view showing bird's-eye views 10F, 10B, 10L, 10R obtained from images photographed with the respective cameras 1F, 1B, 1L, 1R;

FIG. 9 is a schematic view showing that four bird's-eye views 10F, 10B, 10L, 10R are synthesized by converting three bird's-eye views 10F, 10L, 10R to bird's-eye view coordinate of the rear camera 1B by rotation and parallel translation with respect to the bird's-eye view 10B to the rear view camera 1B of FIG. 8;

FIG. 10 is a schematic view showing an example of a pectinate border line $D'_{BL}$ for use in the embodiment 1 at an overlapping portion between the bird's-eye view 10B and bird's-eye view 10L;

FIG. 11 is a schematic view showing an example of image at the overlapping portion after synthesis;

FIG. 12 is a schematic view showing another example of pectinate border line $D'_{BL}$ for use in the embodiment 1 at the overlapping portion between the bird's-eye view 10B and bird's-eye view 10L;

FIG. 13 is a block diagram showing the electric configuration of a vehicle drive assistant system provided on a vehicle;

FIG. 14 is a flow chart showing the procedure by the image processing unit 2;

FIG. 15 is a flow chart showing the procedure by the image processing unit 2;

FIG. 16 is a flow chart showing the procedure by the image processing unit 2;

FIG. 17 is a flow chart showing the procedure by the image processing unit 2;

FIG. 18 is a flow chart showing the detailed procedure of processing in step S44 in FIG. 17;

FIG. 19a is a schematic diagram showing examples of gray images 40L and 40B;

FIG. 19b is a schematic diagram showing a difference region between the gray regions 40L and 40B; and

FIG. 19c is a schematic diagram showing an edge portion in the difference region of the gray image 40L and an edge portion in the difference region of the gray image 40B.

DESCRIPTION OF THE PREFERRED EMBODIMENTS

Hereinafter the preferred embodiments of the present invention will be described with reference to the accompanying drawings.

[A] First embodiment

[1] Description of generation method of bird's-eye view

First, a method for generating a bird's-eye view from an image photographed by a camera will be described.

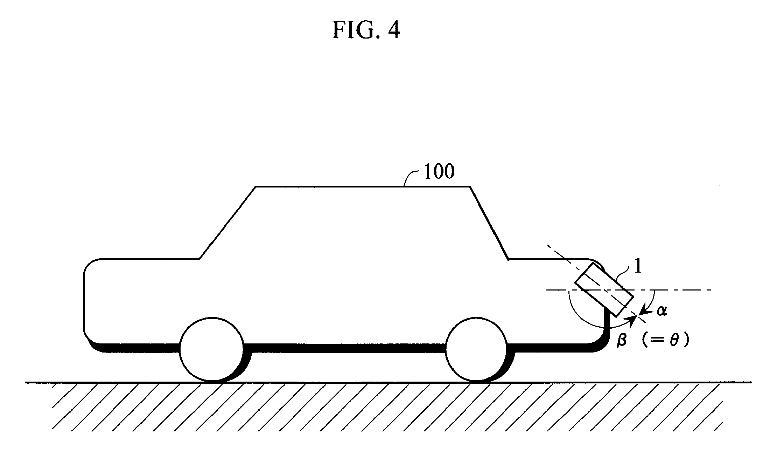

Assume that a camera 1 is disposed to be directed obliquely backward at the rear portion of a vehicle 100 as shown in FIG. 4. Angles formed between the horizontal surface and the optical axis of the camera 1 includes two kinds, that is, an angle indicated with $\alpha$ and an angle indicated with $\beta$ in FIG. 4. The $\alpha$ is generally called look-down angle or angle of depression. In this specification, the angle of $\beta$ is assumed to be an inclination angle $\theta$ of the camera 1 to the horizontal surface.

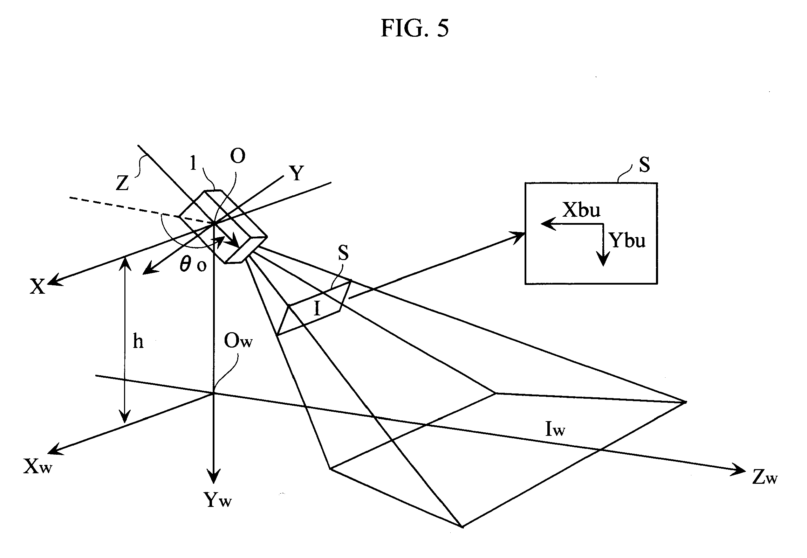

FIG. 5 shows the relationship among a camera coordinate system XYZ, a coordinate system $X_{bu}$, $Y_{bu}$ of an image pickup face S of the camera 1 and a world coordinate system $X_w$, $Y_w$, $Z_w$ containing two-dimensional ground coordinate system $X_w$, $Z_w$.

In the camera coordinate system XYZ, when the optical center of a camera is supposed to be home position O, the Z-axis is taken in the direction of the optical axis, the X-axis is taken in a direction perpendicular to the Z-axis and parallel to the ground surface and the Y-axis is taken as a direction perpendicular to the Z-axis and X-axis. In the coordinate system $X_{bu}$, $Y_{bu}$ of the image pickup image S, home position is set at the center of the image pickup face S and the $X_{bu}$ axis is taken in the crosswise direction of the image pickup face S while the $Y_{bu}$ axis is taken in the lengthwise direction of the image pickup face S.

In the world coordinate system $X_w$, $Y_w$, $Z_w$, an intersection between a vertical line passing through the home position O of the camera coordinate system XYZ and the ground surface is home position $O_w$, the $Y_w$ axis is taken in a direction perpendicular to the ground surface, the $X_w$ axis is taken in a direction parallel to the X axis of the camera coordinate system XYZ and the $Z_w$ axis is taken in a direction perpendicular to the $X_w$ axis and $Y_w$ axis.

The amount of parallel translation between the world coordinate system $X_w$, $Y_w$, $Z_w$ and the camera coordinate system XYZ is [0, h, 0] and the amount of rotation around the X-axis is $\theta$.

Therefore, conversion equation between the coordinates (x, y, z) of the camera coordinate system XYZ and the coordinates $(x_w, y_w, z_w)$ of the world coordinate system $X_w$, $Y_w$, $Z_w$ is expressed in a following equation (1).

$$\begin{bmatrix} x \\ y \\ z \end{bmatrix} = \begin{bmatrix} 1 & 0 & 0 \\ 0 & \cos\theta & -\sin\theta \\ 0 & \sin\theta & \cos\theta \end{bmatrix} \left\{ \begin{bmatrix} x_w \\ y_w \\ z_w \end{bmatrix} + \begin{bmatrix} 0 \\ h \\ 0 \end{bmatrix} \right\} \qquad (1)$$

Assuming that the focal distance of the camera 1 is f, the conversion equation between the coordinates $(x_{bu}, y_{bu})$ of the coordinate system $X_{bu}$, $Y_{bu}$ of the image pickup face S and the coordinates (x, y, z) of the camera coordinate system XYZ can be expressed in a following equation (2).

$$\begin{bmatrix} x_{bu} \\ y_{bu} \end{bmatrix} = \begin{bmatrix} f\,\dfrac{x}{z} \\ f\,\dfrac{y}{z} \end{bmatrix} \qquad (2)$$

A conversion equation (3) between the coordinates $(x_{bu}, y_{bu})$ of the coordinate system $X_{bu}$, $Y_{bu}$ of the image pickup face S and the coordinates $(x_w, z_w)$ of the two-dimensional ground coordinate system $X_w$, $Z_w$ is obtained from the above-described equations (1), (2).

$$\begin{bmatrix} x_{bu} \\ y_{bu} \end{bmatrix} = \begin{bmatrix} \dfrac{fx_w}{h\sin\theta + z_w\cos\theta} \\ \dfrac{(h\cos\theta - z_w\sin\theta)f}{h\sin\theta + z_w\cos\theta} \end{bmatrix} \qquad (3)$$

Projection from the two-dimensional ground coordinate system $X_w$, $Z_w$ to the bird's-eye view coordinate system $X_{au}$, $Y_{au}$ of a virtual camera is carried out by parallel translation. Assuming that the focal distance of the camera 1 is f and the height of the virtual camera is H, the conversion equation between the coordinates $(x_w, z_w)$ of the two-dimensional ground coordinate system $X_w$, $Z_w$ and the coordinates $(x_{au}, y_{au})$ of the bird's eye coordinate system $X_{au}$, $Y_{au}$ is expressed in a following equation (4). The height H of the virtual camera is set up preliminarily.

$$\begin{bmatrix} x_{au} \\ y_{au} \end{bmatrix} = \frac{f}{H}\begin{bmatrix} x_w \\ z_w \end{bmatrix} \qquad (4)$$

A following equation (5) is obtained from the aforementioned equation (4).

$$\begin{bmatrix} x_w \\ z_w \end{bmatrix} = \frac{H}{f}\begin{bmatrix} x_{au} \\ y_{au} \end{bmatrix} \qquad (5)$$

By assigning the obtained equation (5) to the aforementioned equation (3), a following equation (6) is obtained.

$$\begin{bmatrix} x_{bu} \\ y_{bu} \end{bmatrix} = \begin{bmatrix} \dfrac{fHx_{au}}{fh\sin\theta + Hy_{au}\cos\theta} \\ \dfrac{f(fh\cos\theta - Hy_{au}\sin\theta)}{fh\sin\theta + Hy_{au}\cos\theta} \end{bmatrix} \qquad (6)$$

An equation (7) for converting the coordinates $(x_{bu}, y_{bu})$ of inputted image I to the coordinates $(x_{au}, y_{au})$ of bird's eye coordinate system $X_{au}$, $Y_{au}$ is obtained from the aforementioned equation (6).

$$\begin{bmatrix} x_{au} \\ y_{au} \end{bmatrix} = \begin{bmatrix} \dfrac{x_{bu}\left(fh\sin\theta + Hy_{au}\cos\theta\right)}{fH} \\ \dfrac{fh\left(f\cos\theta - y_{bu}\sin\theta\right)}{H\left(f\sin\theta + y_{bu}\cos\theta\right)} \end{bmatrix} \qquad (7)$$

The inputted image I is converted to bird's-eye view using the aforementioned equation (7).

[2] Description of basic concept of generation method of all around bird's-eye view

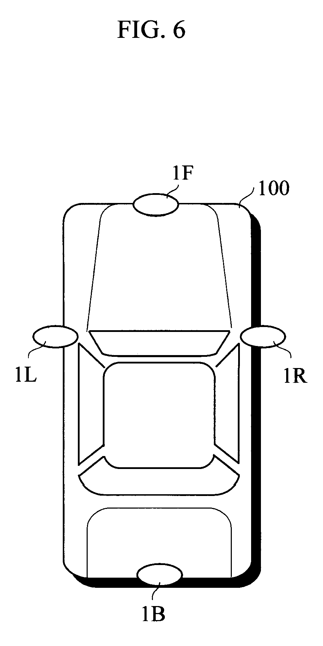

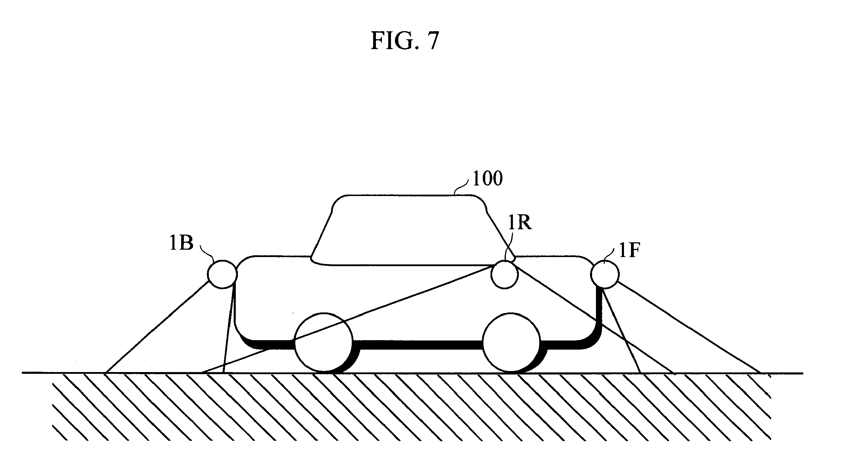

FIGS. 6, and 7 show cameras provided on a vehicle. The vehicle is provided with cameras (image pickup devices) 1F, 1B, 1L, 1R at its front portion, rear portion, left side portion and right side portion, respectively. The camera 1F is disposed to be directed forward obliquely downward, the camera 1B is disposed to be directed backward obliquely downward, the camera 1L is disposed to be directed leftward obliquely downward and the camera 1R is disposed to be directed rightward obliquely downward.

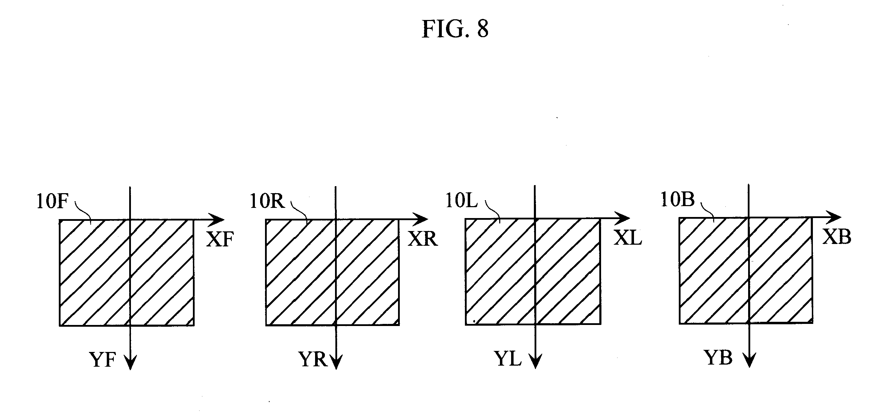

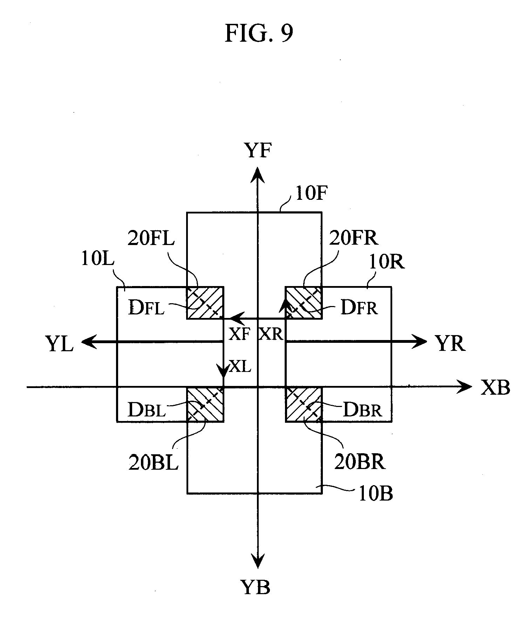

As shown in FIG. 8, bird's-eye views 10F, 10B, 10L, and 10R are generated from images photographed by the respective cameras 1F, 1B, 1L, and 1R. Next, the bird's-eye views 10F, 10B, 10L, and 10R generated for the respective cameras 1F, 1B, 1L, and 1R as shown in FIG. 9 are converted to a bird's-eye view coordinate of the rear camera 1B by rotation and parallel translation of three bird's-eye views 10F, 10L, and 10R with respect to the bird's-eye view 10B to the rear camera 1B. In this case, portions in which the two bird's-eye views overlap each other are generated as shown in FIG. 9. The feature of this embodiment exists in how the both bird's-eye views are synthesized.

At an overlapping portion $20_{FL}$ between the bird's-eye view 10F and bird's-eye view 10L, a line connecting its upper left crest with its lower right crest is assumed to be an ordinary border line $D_{FL}$. At an overlapping portion $20_{FR}$ between the bird's-eye view 10F and bird's-eye view 10R, a line connecting the upper right crest with the lower left crest is assumed to be an ordinary border line $D_{FR}$. At an overlapping portion $20_{BL}$ between the bird's-eye view 10B and the bird's-eye view 10L, a line connecting the upper right crest with the lower left crest is assumed to be an ordinary border line $D_{BL}$. At an overlapping portion $20_{BR}$ between the bird's-eye view 10B and the bird's-eye view 10R, a line connecting the upper left crest with the lower right crest is assumed to be an ordinary border line $D_{BR}$. Because actually, the overlapping portion is not formed in a rectangular shape, usually, an appropriate border line dividing the overlapping portion into two portions is assumed to be an ordinary border line.

Conventionally, at the overlapping portion in which two bird's-eye views overlap each other, one bird's-eye view is adopted in one region separated by the ordinary border line while in the other region, the other bird's-eye view is adopted. More specifically, at the overlapping portion $20_{BL}$ in which the bird's-eye view 10B and bird's-eye view 10L overlap each other, the bird's-eye view 10L is adopted in a region above the ordinary border line $D_{BL}$ and the bird's-eye view 10B is adopted in a region below the ordinary border line $D_{BL}$. Thus, there is such a problem that any object having a height disappears on a synthesized bird's-eye view.

According to the first embodiment, a pectinate border line in which two different regions appear alternately in the form of a slit in two regions divided by the ordinary border line is provided at each overlapping portion. One bird's-eye view is adopted in one region separated by the pectinate border line while the other bird's-eye view is adopted in the other region.

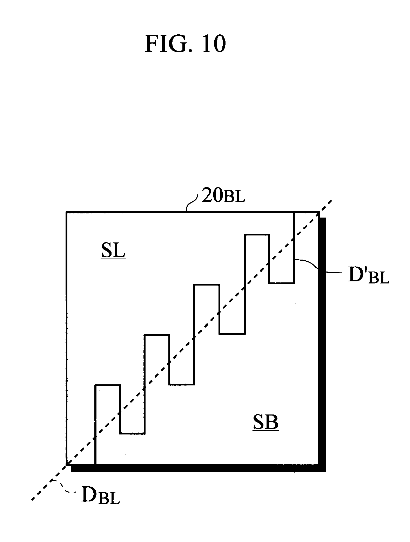

For example, a pectinate border line $D'_{BL}$ in which teeth are arranged in the direction of the ordinary border line $D_{BL}$ while the teeth are parallel to a direction perpendicular to a monitor screen at the overlapping portion $20_{BL}$ between the bird's-eye view 10B and bird's-eye view 10L as shown in FIG. 10 is used. Then, the bird's-eye view 10L is adopted in a region SL above the pectinate border line $D'_{BL}$ within the overlapping portion $20_{BL}$ while the bird's-eye view 10B is adopted in a region SB below the pectinate border line $D'_{BL}$.

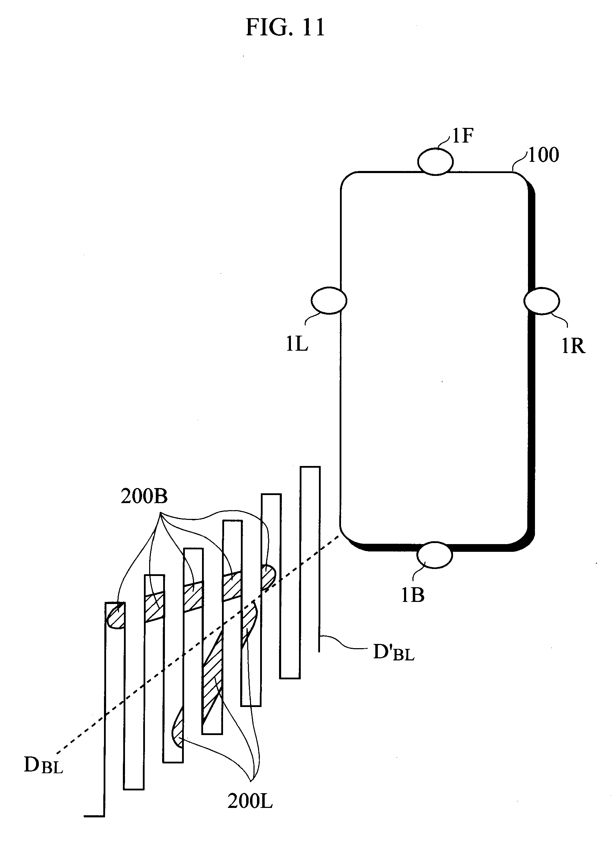

When this synthesis method is used, for example, if an object 200 having a height exists on the left side obliquely backward of the left rear end of a vehicle as shown in FIG. 2, that object 200 appears on all around bird's-eye view after the synthesis as shown in FIG. 11. In FIG. 11, $D'_{BL}$ indicates a pectinate border line and 200L indicates a bird's-eye view of the object 200 obtained from an image photographed by the left side camera 1L while 200B indicates a bird's-eye view of the object 200 obtained from an image photographed by the rear camera 1B. As evident from FIG. 11, the object 200 can be recognized clearly because a projection image of the object 200 having a height does not disappear and its object image is not blended with the background. Further, because the object image obtained from the image photographed by the left side camera 1L and the object image obtained from the image photographed by the rear camera 1B appear alternately, these two object images can be recognized easily as a single object image.

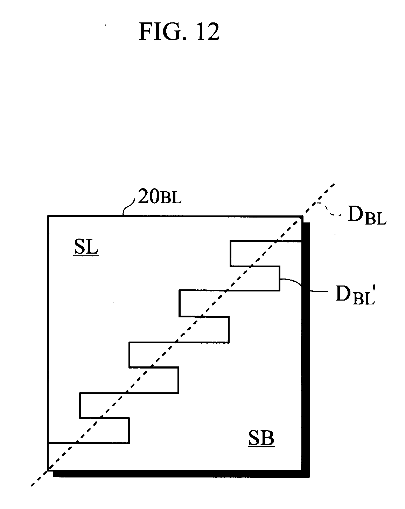

In the meantime, as the pectinate border line, it is permissible to use a pectinate border line in which the teeth are arranged in the direction of the ordinary border line while the teeth are arranged in parallel to the horizontal direction of the monitor screen as shown in FIG. 12. Further, a pectinate border line in which the teeth intersect the ordinary border line may be used. Further, a pectinate border line in which the teeth are parallel to the ordinary border line may be used.

The length of and interval between the teeth on the pectinate border line are preferably adjusted depending on the resolution of the monitor and such that the double image is not displayed easily.

[3] Description of a specific example of generation method of all around bird's-eye view

The coordinate of an inputted image I (image produced by lens distortion correction to an image photographed by camera) on bird's-eye view corresponding to the coordinate of each pixel can be preliminarily obtained from the equation (7).

Conversion of coordinate on bird's-eye views corresponding to the respective cameras 1F, 1B, 1L, and 1R to coordinate on the all around bird's-eye view is carried out by a predetermined rotation and a predetermined parallel translation. That is, all conversion parameters for converting the inputted image I after correction of distortion of photographed image by each camera to bird's-eye view and further converting the obtained bird's-eye view to all around bird's-eye view are of a fixed value. Thus, the coordinate of the inputted image I (image obtained by correcting lens distortion) obtained from the respective cameras 1F, 1B, 1L, and 1R on the all around bird's-eye view corresponding to the coordinate of each pixel can be preliminarily obtained.

Because in the all around bird's-eye view, a region in which two bird's-eye views overlap each other and a region divided by the aforementioned pectinate border line at each overlapping portion are already known, which of the two bird's-eye views is adopted as each coordinate within each overlapping portion on the all around bird' eye view can be determined preliminarily.

In this embodiment, a coordinate reverse conversion table indicating which image of which pixel is to be allocated of images of respective pixels in the inputted image I (image obtained by correcting the lens distortion) obtained from the respective cameras 1F, 1B, 1L, and 1R is prepared preliminarily for each coordinate on the all around bird's-eye view. Data for specifying an image to be embedded into each coordinate on the all around bird's-eye view is memorized in the coordinate reverse conversion table. The data for specifying the image to be allocated to each coordinate on the all around bird's-eye view comprises data for specifying a camera and data (coordinate data) for specifying the pixel position of the inputted image I (image obtained by correcting lens distortion) obtained from a camera. As the inputted image I, images photographed by the respective cameras 1F, 1B, 1L, and 1R may be used by considering lens distortion.

[4] Description of the structure of vehicle drive assistant system

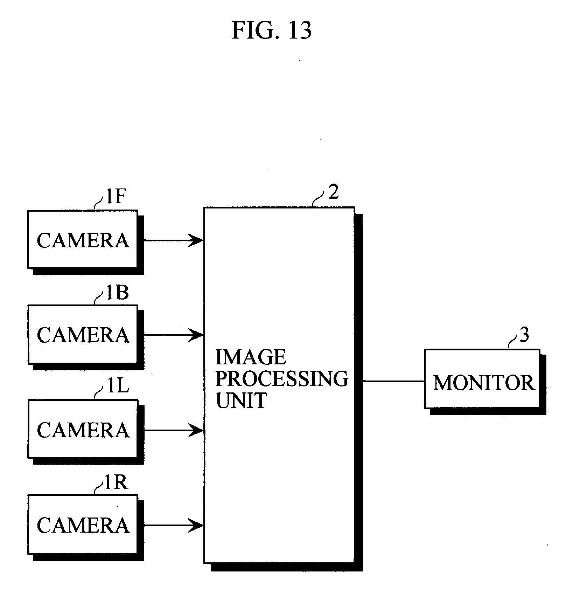

FIG. 13 shows the electric structure of the vehicle drive assistant system provided on a vehicle. The vehicle drive assistant system is provided with four cameras 1L, 1R, 1F, and 1B, an image processing unit 2 for generating an all around bird's-eye view from images photographed by the cameras 1L, 1R, 1F, and 1B and a monitor (display unit) 3 which displays an all around bird's-eye view generated by the image processing unit 2. The image processing unit 2 includes a memory which memorizes the aforementioned coordinate reverse conversion table.

As the camera 1L, 1R, 1F, and 1B, for example, a CCD camera is used. The image processing unit 2 is constituted of, for example, a micro computer. As the monitor 3, for example, monitor of navigation system is used.

The image processing unit 2 generates the all around bird's-eye view using images photographed by the cameras 1L, 1R, 1F, and 1B and the coordinate reverse conversion table. The all around bird's-eye view generated by the image processing unit 2 is displayed on the monitor 3.

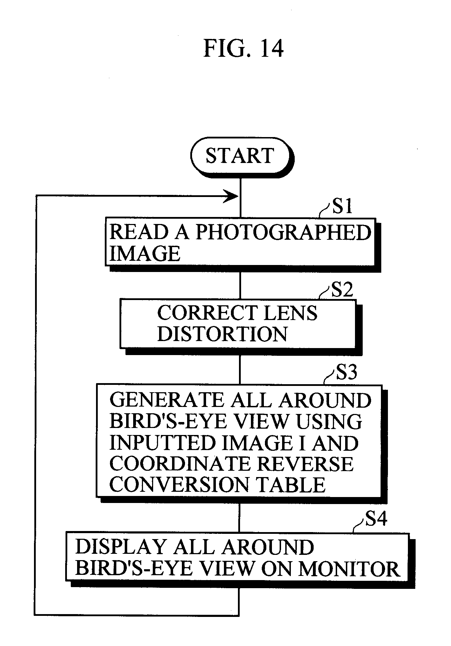

FIG. 14 shows the procedure by the image processing unit 2. First, images photographed by the respective cameras 1F, 1B, 1L, and 1R are read (step S1). Next, lens distortion correction is carried out to each read image (step S2). Hereinafter, an image obtained by the lens distortion correction is called an inputted image I.

Next, the all around bird's-eye view is generated using the inputted image I obtained from the images photographed by the respective cameras 1F, 1B, 1L, and 1R and the coordinate reverse conversion table (step S3). The obtained all around bird's-eye view is displayed on the monitor 3 (step S4). Then, the procedure returns to step S1.

[B] Second embodiment

The electric configuration of the vehicle drive assistant system of the second embodiment is the same as that of the first embodiment. The processing content of the image processing unit 2 is different between the second embodiment and the first embodiment. According to the second embodiment, the all around bird's-eye view taking preference to the side camera and the all around bird's-eye view taking preference to the front/rear cameras are displayed alternately on the monitor. The all around bird's-eye view taking preference to the side camera refers to an all around bird's-eye view obtained by adopting only a bird's-eye view obtained from images photographed by the right and left cameras at each overlapping portion in which two bird's-eye views overlap each other in an all around bird's-eye view coordinate system shown in FIG. 9. More specifically, it refers to an all around bird's-eye view obtained by adopting only the bird's-eye image 10L obtained from the left side camera 1L at the overlapping portions $20_{FL}$ and $20_{BL}$ in FIG. 9 and only the bird's-eye view 10R obtained from the right side camera 1R at the overlapping portions $20_{FR}$ and $20_{BR}$ in FIG. 9.

The all around bird's-eye view taking preference to the front and rear cameras refers to an all around bird's-eye view obtained by adopting only a bird's-eye view obtained from images photographed by the front and rear cameras at each overlapping portion in which two bird's-eye views overlap each other in the all around bird's-eye view coordinate system shown in FIG. 9. More specifically, it refers to an all around bird's-eye view obtained by adopting only the bird's-eye view 10F obtained by the front camera 1F at the overlapping portions $20_{FL}$ and $20_{FR}$ in FIG. 9 and only the bird's-eye view 10B obtained by the rear camera 1B at the overlapping portions $20_{BL}$ and $20_{BR}$ in FIG. 9.

The image processing unit 2 comprises a first coordinate reverse conversion table for generating the all around bird's-eye view taking preference to the side cameras and a second coordinate reverse conversion table for generating the all around bird's-eye view taking preference to the front and rear cameras as the coordinate reverse conversion table.

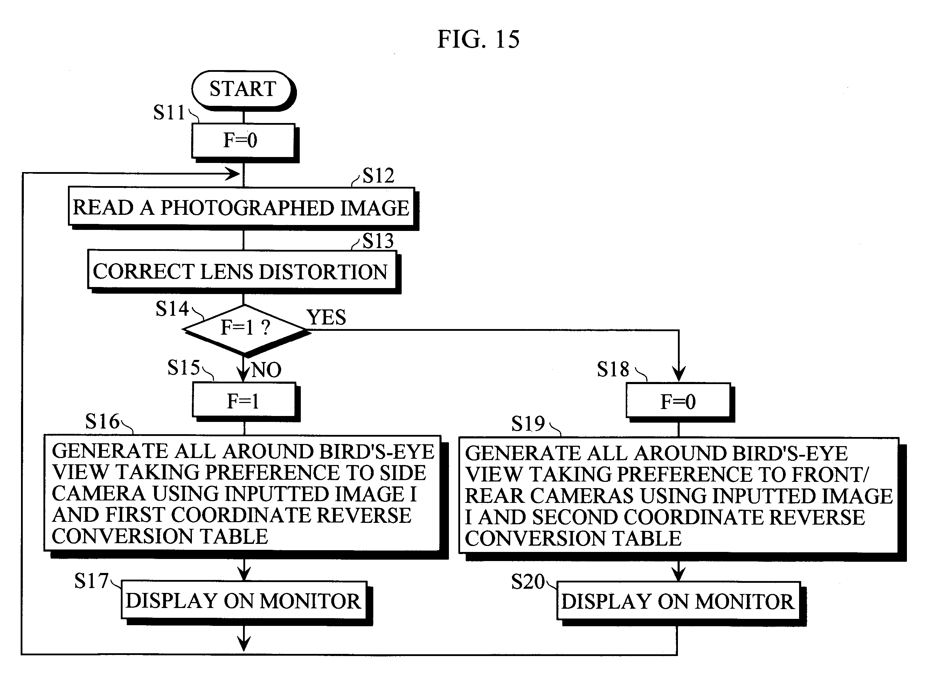

FIG. 15 shows the procedure by the image processing unit 2. First, the flag F is reset (F = 0) (step S11). Images photographed by the respective cameras 1F, 1B, 1L, and 1R are read (step S12). Next, lens distortion correction is carried out to each read image (step S13). Hereinafter, the image obtained by the lens distortion correction is called the inputted image I.

Next, whether or not the flag F is set is determined (step S14). If the flag F is reset (F = 0), after the flag F is set (F = 1) (step S15), an all around bird's-eye view taking preference to the side camera is generated using the inputted image I and the first coordinate reverse conversion table (step S16). The obtained all around bird's-eye view taking preference to the side camera is displayed on the monitor 3 (step S17). Then, the procedure returns to step S12.

If the flag F is set in the above-described step S14 (F = 1), after the flag F is reset (F = 0) (step 18), an all around bird's-eye view taking preference to the front and rear cameras is generated using the inputted image I and the second coordinate reverse conversion table (step S19). The obtained all around bird's-eye view taking preference to the front and rear cameras is displayed on the monitor 3 (step S20). Then, the procedure returns to step S12.

Because the all around bird's-eye view taking preference to the side camera and the all around bird's-eye view taking preference to the front and rear cameras are displayed alternately on the monitor in the second embodiment, if the object 200 having a height exists on the left side obliquely backward of the left rear end of a vehicle as shown in FIG. 2, for example, a projection image of the object 200 having a height does not disappear but displayed. Further, because the synthesized bird's-eye view taking preference to the side camera and the synthesized bird's-eye view taking preference to the front/rear cameras are directed in different directions, the projection image of this object 200 having a height looks to move at a timing when those images are changed over. Thus, a vehicle driver can recognize the object 200 more easily.

Although it is assumed that the fetch-in interval of photographed images is relatively long in FIG. 15, if the fetch-in interval of the photographed images is as short as for every frame, for example, the all around bird's-eye view taking preference to the side camera and the all around bird's-eye image taking preference to the front/rear cameras may be changed over for display every several frames (for example, every 15 frames).

Although the first coordinate reverse conversion table for generating the all around bird's-eye view taking preference to the side camera and the second coordinate reverse conversion table for generating the all around bird's-eye view taking preference to the front and rear cameras are provided as the coordinate reverse conversion table, it is permissible to use one coordinate reverse conversion table instead of these two coordinate reverse conversion tables. In this case, for example, it is permissible to memorize data (data for specifying a camera and coordinate data) indicating the pixel positions corresponding to both the bird's-eye views 10L and 10B for each coordinate within an overlapping portion between the bird's-eye view 10L obtained from the left side camera 1L and the bird's-eye view 10B obtained from the rear camera 1B, adopt data indicating the pixel position corresponding to the bird's-eye view 10L when generating the all around bird's-eye view taking preference to the side camera and adopt data indicating the pixel position corresponding to the bird's-eye view 10B when generating the all around bird's-eye view taking preference to the front/rear cameras.

If the object 200 having a height exists on the left side obliquely backward of the left rear end of a vehicle when the cameras 1F, 1B, 1L, and 1R are provided on the front, rear, right and left sides of the vehicle as shown in FIG. 2, a projection image by the left side camera 1L turns to 200L and a projection image by the rear camera 1B turns to 200B.

If both the projection images 200L and 200B exist at an overlapping portion between a bird's-eye view obtained from the photographed image by the left side camera 1L and a bird's-eye view obtained from the photographed image by the rear camera 1B in the all around bird's-eye view coordinate system shown in FIG. 9, those projection images 200L and 200B appear at different positions. Therefore, both the projection images 200L and 200B are detected as a difference value when a difference between both the bird's-eye views is obtained at this overlapping portion.

When at an overlapping portion in which two bird's-eye views overlap each other, a difference between both the gray images is obtained after those bird's-eye views are converted to gray images, a difference region in which an absolute value of the difference value is over a predetermined threshold value is extracted if an object (obstacle) having a height exists. Therefore, it is possible to determine whether or not any obstacle having a height exists in each overlapping portion depending on whether or not the difference region is extracted from each overlapping portion.

If whether or not an object (obstacle) having a height exists at each overlapping portion in which the bird's-eye views overlap each other in the all around bird's-eye view coordinate system shown in FIG. 9 and any obstacle exists in at least one overlapping portion, the all around bird's-eye view taking preference to the side camera and the all around bird's-eye view taking preference to the front/rear cameras are generated alternately for display and if no obstacle exists in any overlapping portion, a predetermined one all around bird's-eye view of the all around bird's-eye view taking preference to the side camera and the all around bird's-eye view taking preference to the front and rear cameras may be generated and displayed.

If any obstacle exists in at least one overlapping portion, the bird's-eye view taking preference to the side camera and the bird's-eye view taking preference to the front/rear cameras may be generated and displayed alternately for only an overlapping portion in which the obstacle exists while the same kind of the bird's-eye view may be generated for the other overlapping portion and displayed.

[C] Third embodiment

Although according to the second embodiment, the all around bird's-eye view taking preference to the side camera and the all around bird's-eye view taking preference to the front/rear cameras are displayed on the monitor alternately, the all around bird's-eye view taking preference to the side camera and the all around bird's-eye view taking preference to the front/rear cameras may be changed over depending on the travel condition of a vehicle.

If the object 200 having a height exists on the left side obliquely backward of the left rear end of the vehicle as shown in FIG. 2, this object 200 moves out of the photographing area of the rear camera 1B when the vehicle backs up straight. Then, in this case, the all around bird's-eye view taking preference to the side camera is generated and displayed. On the other hand, if the object 200 having a height exists on the left side obliquely backward of the left rear end of the vehicle as shown in FIG. 2, this object 200 moves out of the photographing area of the left side camera 1L when the vehicle backs up while curving to the left obliquely backward. Then, in such a case, the all around bird's-eye view taking preference to the front/rear cameras is generated and displayed.

The electric structure of the vehicle drive assistant system according to the third embodiment is equal to that of the first embodiment. In the meantime, the travel condition of the vehicle is judged based on for example, vehicle gear sensor, operating direction of the steering wheel, vehicle velocity pulse and the like.

The image processing unit 2 includes a first coordinate reverse conversion table for generating an all around bird's-eye image taking preference to the side camera and a second coordinate reverse conversion table for generating the all around bird's-eye view taking preference to the front/rear cameras as the coordinate reverse conversion table.

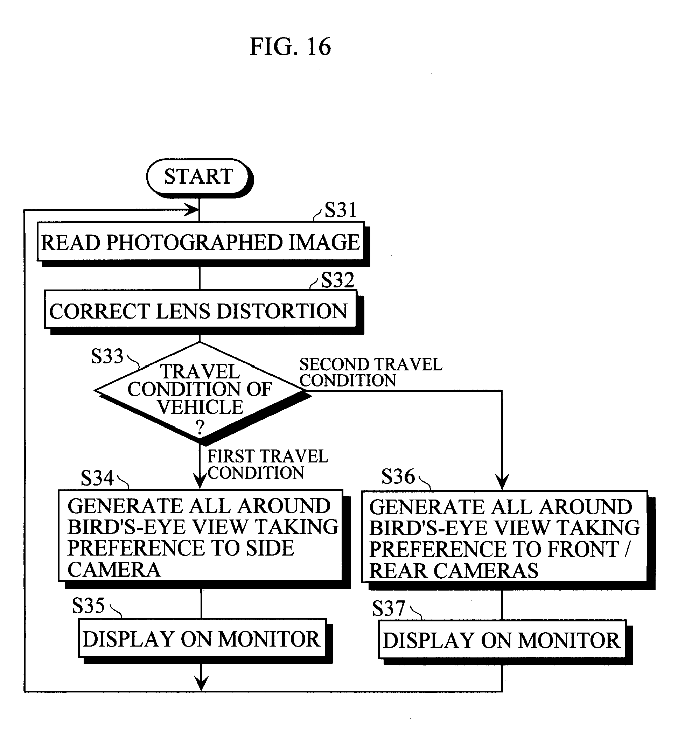

FIG. 16 shows the procedure by the image processing unit 2. First, images photographed by the respective cameras 1F, 1B, 1L, and 1R are read (step S31). Next, lens distortion correction is carried out to each read image (step S32). Hereinafter, an image obtained by the lens distortion correction is called the inputted image I.

Next, the travel condition of a vehicle is judged (step S33). More specifically, whether a vehicle is in a first travel condition in which it moves forward or backs up straight or in a second travel condition in which it moves while curving obliquely forward or backs up while curving obliquely backward is determined.

If it is determined that the travel condition of the vehicle is the first travel condition, an all around bird's-eye view taking preference to the side camera is generated using the inputted image I and first coordinate reverse conversion table (step S34). The obtained all around bird's-eye view taking preference to the side camera is displayed on the monitor 3 (step S35). Then, the procedure returns to step S31.

If it is determined that the travel condition of the vehicle is the second travel condition in step S33, the all around bird's-eye view taking preference to the front/rear cameras is generated using the inputted image I and the second coordinate reverse conversion table (step S36). The obtained all around bird's-eye view taking preference to the front/rear cameras is displayed on the monitor 3 (step S37). Then, the procedure returns to step S31.

Also in the third embodiment, as in the second embodiment, one coordinate reverse conversion table may be used instead of the first coordinate reverse conversion table and second coordinate reverse conversion table.

[D] Fourth embodiment

According to the fourth embodiment, a bird's-eye view in which the obstacle (object having a height) appears larger is determined among two bird's-eye views which overlap with each other in each overlapping portion in which the two bird's-eye views overlap each other in the all around bird's-eye view coordinate system shown in FIG. 9, and only a bird's-eye view in which the obstacle appears larger is adopted when that overlapping portion is synthesized.

The electric configuration of the vehicle drive assistant system according to the fourth embodiment is equal to that of the first embodiment. The image processing unit 2 includes a coordinate reverse conversion table. As the coordinate reverse conversion table, one reverse conversion table is prepared. Two kinds of data indicating the pixel positions corresponding to two bird's-eye views are memorized for each coordinate in the overlapping portion in which two bird's-eye views overlap each other.

For example, data indicating the pixel positions corresponding to the bird's-eye views 10L and 10B are memorized for each coordinate in the overlapping portion between the bird's-eye view 10L obtained from the left side camera 1L and the bird's-eye view 10B obtained form the rear camera 1B. If the obstacle appears larger in, for example, the bird's-eye view 10L among both the bird's-eye views 10L and 10B in this overlapping portion, data indicating the pixel position corresponding to the bird's-eye view 10L is selected.

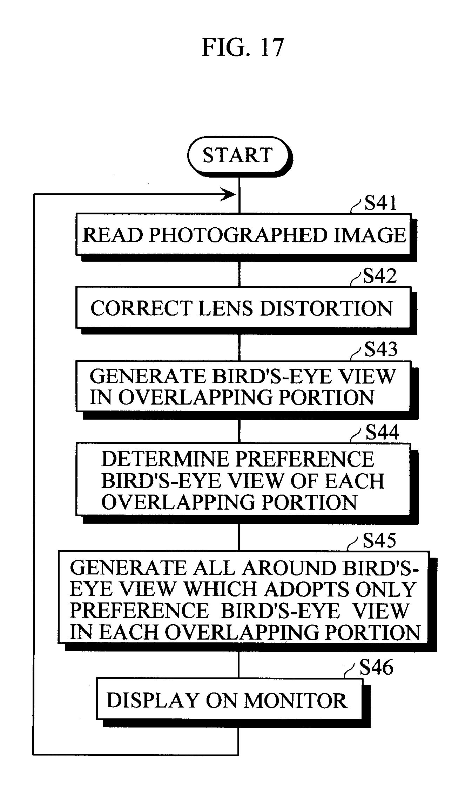

FIG. 17 shows the procedure by the image processing unit 2. First, images photographed by the respective cameras 1F, 1B, 1L, and 1R are read (step S41). Next, lens distortion correction is carried out to each read image (step S42). Hereinafter, the image obtained by the lens distortion correction is called the inputted image I.

Next, a bird's-eye view at a portion in which two bird's-eye views overlap on the all around bird's-eye view coordinate is generated for each of the cameras 1F, 1B, 1L, and 1R using the inputted image I and the coordinate reverse conversion table (step S43).

Which of the two bird's-eye views is taken with preference is determined for each overlapping portion in which two bird's-eye views overlap based on the bird's-eye view obtained in step S43 (step S44). That is, a preference bird's-eye view is determined for each overlapping portion. The detail of this processing will be described later.

Next, an all around bird's-eye view adopting only the bird's-eye view determined to be taken with preference in step S44 in each overlapping portion is generated using a determination result in step S44, the inputted image I and the coordinate reverse conversion table (step S45). The obtained all around bird's-eye view is displayed on the monitor 3 (step S46). Then, the procedure returns to step S41.

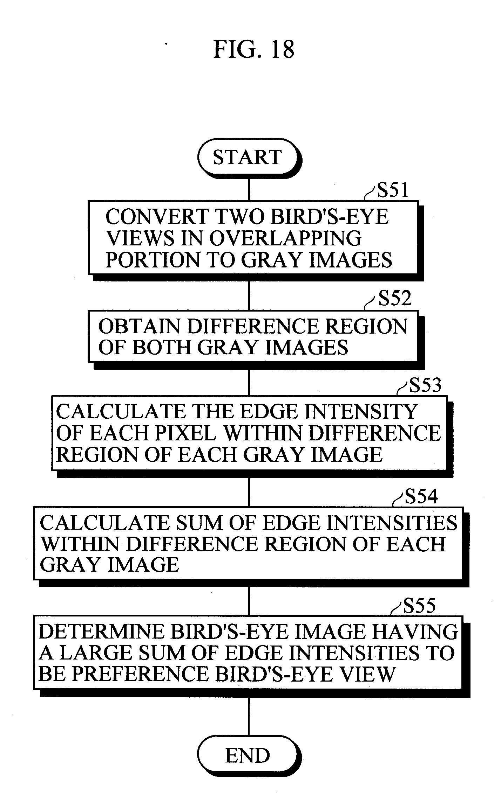

FIG. 18 shows the detailed procedure of processing of the aforementioned step S44. An overlapping portion between the bird's-eye view 10L obtained from the left side camera 1L and the bird's-eye view 10B obtained from the rear camera 1B will be exemplified. Among the bird's-eye views at the overlapping portion, an image obtained from an image photographed by the left side camera 1L is expressed in 30L and an image obtained from the rear camera 1B is expressed in 30B.

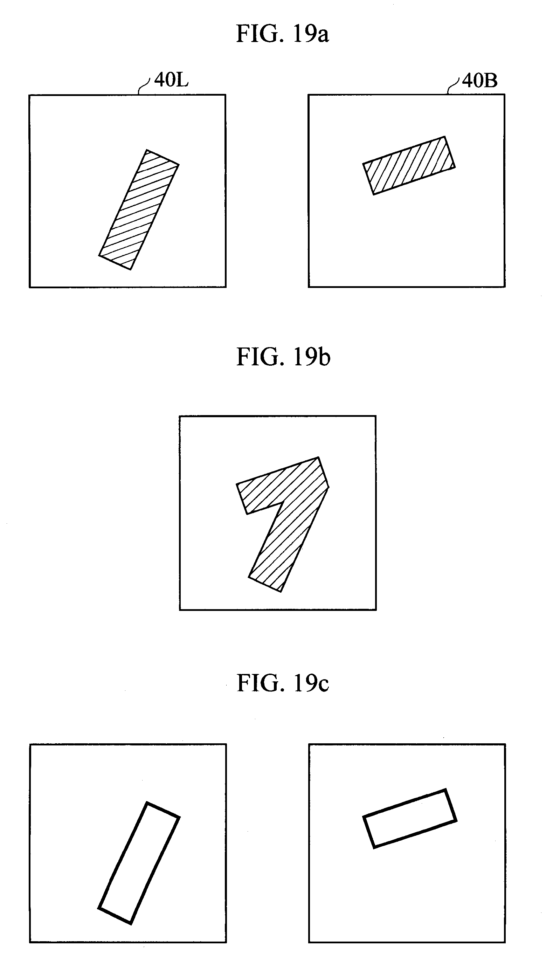

The bird's-eye views 30L and 30B at the overlapping portion are converted to gray images 40L and 40B (step S51). FIG. 19a shows an example of the gray images 40L and 40B.

A difference region between the gray images 40L and 40B is obtained (step S52). More specifically, a difference between the gray images 40L and 40B is obtained and a region in which an absolute value of a difference value is over a predetermined threshold value is regarded as the difference region. If the gray images 40L and 40B are as indicated in FIG. 19a, the difference region is as indicated in FIG. 19b.

Edge extraction processing is carried out within the difference region obtained in step S52 for each of the gray images 40L and 40B (step S53). That is, edge intensity is calculated for each pixel within the difference region for each of the gray images 40L and 40B. Next, a sum of the edge intensities in the difference region is calculated for each of the gray images 40L and 40B (step S54). Then, a bird's-eye view having a larger sum of the edge intensities is determined to be preference bird's-eye view (step S55). In the meantime, it is permissible to use the number of detected edges and area of a region surrounded by the edge portions instead of the sum (integrated value) of the edge intensities.

If the gray images 40L and 40B are as indicated in FIG. 19a, the edge portion within the difference region in the gray image 40L is as indicated in a left diagram of FIG. 19c and the edge portion within the difference region in the gray image 40B is as indicated in a right diagram of FIG. 19c. Because the area of the edge portion within the difference region in the gray image 40L is larger than the area of the edge portion within the difference region in the gray image 40B, a bird's-eye view obtained form the left side camera 1L is regarded as the preference bird's-eye view.

[E] Fifth embodiment

As described above, whether or not an object (obstacle) having a height exists in the overlapping portion is determined depending on whether or not a difference region is extracted for each overlapping portion in which two bird's-eye views overlap each other.

In the above first, second, third and fourth embodiments, whether or not any obstacle exists in each overlapping portion is determined and if any obstacle exists in at least one overlapping portion, preferably, a mark indicating the obstacle is displayed on the all around bird's-eye view or an alarm sound is produced. As the mark indicating the obstacle, for example, a mark which surrounds the obstacle is used.

**Claims**

1. A vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising
a means for, when each overlapping portion in which two bird's-eye views overlap each other is synthesized, setting a border line which allows two regions to be alternately disposed with respect to the overlapping portion and adopting a bird's-eye view in a region separated by the border line in the overlapping portion while adopting the other bird's-eye view in the other region separated by the border line so as to synthesize the overlapping portion.

2. A vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising
a means for, when each overlapping portion in which two bird's-eye views overlap each other is synthesized, setting a pectinate border line with respect to the overlapping portion, and adopting a bird's-eye view in a region separated by the pectinate border line in the overlapping portion while adopting the other bird's-eye view in the other region separated by the pectinate border line so as to synthesize the overlapping portion.

3. A vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising:

a first synthesized bird's-eye view generating means for, when each bird's-eye view is synthesized, generating a first synthesized bird's-eye view obtained by adopting only a bird's-eye view preliminarily set in each overlapping portion in which two bird's-eye views overlap;
a second synthesized bird's-eye view generating means for, when each bird's-eye view is synthesized, generating a second synthesized bird's-eye view obtained by adopting only the other bird's-eye view preliminarily set in each overlapping portion in which two bird's-eye views overlap; and
a control means for displaying the first synthesized bird's-eye view and the second synthesized bird's-eye view alternately on the display unit by changing over the first synthesized bird's-eye view generating means and the second synthesized bird's-eye view generating means alternately.

4. A vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising:

a first synthesized bird's-eye view generating means for, when each bird's-eye view is synthesized, generating a first synthesized bird's-eye view obtained by adopting only a bird's-eye view preliminarily set in each overlapping portion in which two bird's-eye views overlap;
a second synthesized bird's-eye view generating means for, when each bird's-eye view is synthesized, generating a second synthesized bird's-eye view obtained by adopting only the other bird's-eye view preliminarily set in each overlapping portion in which two bird's-eye views overlap;
a determining means for determining whether or not an object having a height exists by comparing two bird's-eye views in each overlapping portion in which two bird's-eye views overlap each other;
a first control means which, if it is determined that the object having the height exists in at least one overlapping portion by the determining means, displays the first synthesized bird's-eye view and the second synthesized bird's-eye view alternately on the display unit by changing over the first synthesized bird's-eye view generating means and the second synthesized bird's-eye view generating means alternately; and
a second control means which, if it is determined that no object having a height exists in any overlapping portion by the determining means, generates a synthesized bird's-eye view by any one synthesized bird's-eye view generating means preliminarily set among the first synthesized bird's-eye view generating means and the second synthesized bird's-eye view generating means and displays a generated synthesized bird's-eye view on the display unit.

**5.** A vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising:

a first synthesized bird's-eye view generating means for, when each bird's-eye view is synthesized, generating a first synthesized bird's-eye view obtained by adopting only a bird's-eye view preliminarily set in each overlapping portion in which two bird's-eye views overlap;

a second synthesized bird's-eye view generating means for, when each bird's-eye view is synthesized, generating a second synthesized bird's-eye view obtained by adopting only the other bird's-eye view preliminarily set in each overlapping portion in which two bird's-eye views overlap;

a selecting means for selecting any one of the first synthesized bird's-eye view generating means and the second synthesized bird's-eye view generating means depending on the advancement condition of the vehicle; and

a control means for generating a synthesized bird's-eye view by the synthesized bird's-eye view generating means selected by the selecting means and displaying a generated synthesized bird's-eye view on the display unit.

**6.** A vehicle drive assistant system which converts, into bird's-eye images, images photographed by a plurality of image pickup devices loaded on a vehicle and for photographing the surrounding of the vehicle, generates a synthesized bird's-eye view by synthesizing each of the obtained bird's-eye images and displays a generated synthesized bird's-eye view on a display unit, the vehicle drive assistant system comprising:

a preference bird's-eye view determining means for determining a bird's-eye view in which an object having a height appears larger among two bird's-eye views in each overlapping portion in which two bird's-eye views overlap as a preference bird's-eye view;

a synthesized bird's-eye view generating means for, when each bird's-eye view is synthesized, generating a synthesized bird's-eye view by adopting only the preference bird's-eye view determined by the preference bird's-eye view determining means in each overlapping portion in which two bird's-eye views overlap; and

a means for displaying, on the display unit, the synthesized bird's-eye view generated by the synthesized bird's-eye view generating means.

**7.** The vehicle drive assistant system according to claim 6 wherein the preference bird's-eye view determining means comprises:

a means which picks up a difference between a bird's-eye view and other bird's-eye view in the overlapping portion in which two bird's-eye views overlap and determines a region in which a difference amount is larger than a predetermined amount as a difference region; and

a means which calculates an integrated value of an edge intensity within the difference region between the two bird's-eye views and determines the bird's-eye view in which the integrated value of the edge intensity is larger as the preference bird's-eye view.

**8.** The vehicle drive assistant system according to any one of the preceding claims further comprising:

a determining means for determining whether or not an object having a height exists by comparing two bird's-eye views in each overlapping portion in which two bird's-eye views overlap each other; and

a means for displaying a mark indicating the object having the height in the synthesized bird's-eye view if it is determined that the object having the height exists in at least one overlapping portion by the determining means.

**9.** The vehicle drive assistant system according to any one of the preceding claims further comprising:

a determining means for determining whether or not an object having a height exists by comparing two bird's-eye views in each overlapping portion in which two bird's-eye views overlap each other; and

a means for producing an alarm sound if it is determined that the object having the height exists in at least one overlapping portion by the determining means.

FIG. 1

FIG. 2

# FIG. 3

FIG. 4

## FIG. 5

EP 1 775 952 A2

FIG. 6

EP 1 775 952 A2

FIG. 7

FIG. 8

FIG. 9

FIG. 10

# FIG. 11

FIG. 12

FIG. 13

```
     1F
  ┌──────────┐
  │ CAMERA   │──────►┐
  └──────────┘       │
     1B              │    ┌────────────────────┐      3
  ┌──────────┐       │    │         2          │   ┌──────────┐
  │ CAMERA   │──────►│    │  IMAGE             │   │ MONITOR  │
  └──────────┘       │    │  PROCESSING ───────────│          │
     1L              │    │  UNIT              │   └──────────┘
  ┌──────────┐       │    │                    │
  │ CAMERA   │──────►│    └────────────────────┘
  └──────────┘       │
     1R              │
  ┌──────────┐       │
  │ CAMERA   │──────►┘
  └──────────┘
```

FIG. 14

```
          ( START )
              │
    ┌─────────▼──────────── S1
    │  READ A PHOTOGRAPHED
    │  IMAGE
    │         │
    │         ▼          S2
    │    CORRECT LENS
    │    DISTORTION
    │         │
    │         ▼          S3
    │  GENERATE ALL AROUND
    │  BIRD'S-EYE VIEW USING
    │  INPUTTED IMAGE I AND
    │  COORDINATE REVERSE
    │  CONVERSION TABLE
    │         │
    │         ▼          S4
    │  DISPLAY ALL AROUND
    │  BIRD'S-EYE VIEW ON MONITOR
    │         │
    └─────────┘
```

FIG. 15

START

S11 — F=0

S12 — READ A PHOTOGRAPHED IMAGE

S13 — CORRECT LENS DISTORTION

S14 — F=1 ?

YES

NO

S15 — F=1

S16 — GENERATE ALL AROUND BIRD'S-EYE VIEW TAKING PREFERENCE TO SIDE CAMERA USING INPUTTED IMAGE I AND FIRST COORDINATE REVERSE CONVERSION TABLE

S17 — DISPLAY ON MONITOR

S18 — F=0

S19 — GENERATE ALL AROUND BIRD'S-EYE VIEW TAKING PREFERENCE TO FRONT/ REAR CAMERAS USING INPUTTED IMAGE I AND SECOND COORDINATE REVERSE CONVERSION TABLE

S20 — DISPLAY ON MONITOR

EP 1 775 952 A2

# FIG. 16

START

/S31
READ PHOTOGRAPHED IMAGE

/S32
CORRECT LENS DISTORTION

S33
TRAVEL
CONDITION OF
VEHICLE
?

SECOND TRAVEL
CONDITION

FIRST TRAVEL
CONDITION

S34
GENERATE ALL AROUND
BIRD'S-EYE VIEW TAKING
PREFERENCE TO SIDE
CAMERA

S36
GENERATE ALL AROUND
BIRD'S-EYE VIEW TAKING
PREFERENCE TO FRONT /
REAR CAMERAS

S35
DISPLAY ON MONITOR

S37
DISPLAY ON MONITOR

## FIG. 17

START

S41
READ PHOTOGRAPHED IMAGE

S42
CORRECT LENS DISTORTION

S43
GENERATE BIRD'S-EYE VIEW IN OVERLAPPING PORTION

S44
DETERMINE PREFERENCE BIRD'S-EYE VIEW OF EACH OVERLAPPING PORTION

S45
GENERATE ALL AROUND BIRD'S-EYE VIEW WHICH ADOPTS ONLY PREFERENCE BIRD'S-EYE VIEW IN EACH OVERLAPPING PORTION

S46
DISPLAY ON MONITOR

# FIG. 18

```
                    ( START )
                                        ⟋S51
        ┌─────────────────────────────────┐
        │ CONVERT TWO BIRD'S-EYE           │
        │ VIEWS IN OVERLAPPING             │
        │ PORTION TO GRAY IMAGES           │
        └─────────────────────────────────┘
                                        ⟋S52
        ┌─────────────────────────────────┐
        │ OBTAIN DIFFERENCE REGION         │
        │ OF BOTH GRAY IMAGES              │
        └─────────────────────────────────┘
                                        ⟋S53
     ┌──────────────────────────────────────┐
     │ CALCULATE THE EDGE INTENSITY          │
     │ OF EACH PIXEL WITHIN DIFFERENCE       │
     │ REGION OF EACH GRAY IMAGE             │
     └──────────────────────────────────────┘
                                        ⟋S54
     ┌──────────────────────────────────────┐
     │ CALCULATE SUM OF EDGE INTENSITIES     │
     │ WITHIN DIFFERENCE REGION OF EACH      │
     │ GRAY IMAGE                            │
     └──────────────────────────────────────┘
                                        ⟋S55
     ┌──────────────────────────────────────┐
     │ DETERMINE BIRD'S-EYE IMAGE HAVING     │
     │ A LARGE SUM OF EDGE INTENSITIES TO    │
     │ BE PREFERENCE BIRD'S-EYE VIEW         │
     └──────────────────────────────────────┘

                    (  END  )
```

## FIG. 19a

40L

40B

## FIG. 19b

## FIG. 19c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11078692 A
- JP 3372944 B